# NEUE EUROPÄISCHE PATENTSCHRIFT

(11) **EP 2 942 249 B2**
(45) Veröffentlichungstag und Bekanntmachung des Hinweises auf die Entscheidung über den Einspruch: **17.12.2025**
(45) Hinweis auf die Patenterteilung: 22.07.2020
(21) Anmeldenummer: 15001137.7
(22) Anmeldetag: 17.04.2015
(51) Int. Cl.: B60T 13/38, B60T 13/68, B60T 13/66, B60T 13/26, B60R 16/03

(54) **DRUCKMITTELBETRIEBENES BREMSSYSTEM FÜR EIN KRAFTFAHRZEUG SOWIE KRAFTFAHRZEUG DAMIT**
BRAKING SYSTEM FOR A MOTOR VEHICLE OPERATED BY A PRESSURISED MEDIUM AND MOTOR VEHICLE EQUIPPED WITH SAME
SYSTÈME DE FREIN ENTRAÎNÉ PAR FLUIDE SOUS PRESSION POUR UN VÉHICULE AUTOMOBILE ET VÉHICULE AUTOMOBILE ASSOCIÉ

(30) Priorität: 08.05.2014 DE 102014006615
(43) Veröffentlichungstag der Anmeldung: 11.11.2015
(73) Patentinhaber: ZF CV Systems Hannover GmbH, 30453 Hannover (DE)
(72) Erfinder: Lülfing, Ralph-Carsten, 30826 Garbsen (DE); Otremba, Robert, 30952 Ronnenberg (DE); Strache, Wolfgang, 30966 Hemmingen (DE)
(74) Vertreter: Wasiljeff, Johannes M.B.

(56) Entgegenhaltungen:
- EP-A1- 2 108 554
- WO-A1-2011/039558
- WO-A1-2013/093545
- DE-A1- 102005 043 607
- DE-A1- 102008 003 379
- DE-A1- 4 320 111

## Beschreibung

Die Erfindung betrifft ein druckmittelbetriebenes Bremssystem für ein Kraftfahrzeug, insbesondere Nutzfahrzeug, mit einer Betriebsbremseinrichtung und einer Feststellbremseinrichtung gemäß dem Oberbegriff von Anspruch 1 sowie ein Kraftfahrzeug mit einem derartigen Bremssystem.

Aus DE 103 36 611 A1 ist ein Bremssystem bekannt, bei dem mehrere pneumatisch betriebene Betriebsbremskreise vorgesehen sind. Z.B. ist ein erster Betriebsbremskreis für die Räder der Vorderachse vorgesehen sowie ein zweiter Betriebsbremskreis für die Räder der Hinterachse. Die zum Bremsen verwendeten Bremszylinder werden pneumatisch betätigt, wobei der dazu notwendige Druck von einem dem jeweiligen Bremskreis zugeordneten Druckluftvorratsbehälter bereitgestellt wird. Dabei wird der bereitgestellte Bremsdruck mittels entsprechender elektropneumatischer Bremssteuermodule ausgesteuert.

EP 2 108 554 A1 offenbart ein Verfahren zum Betreiben einer eine Feststellbremse mit Feststellbremsaktuatoren und eine Betriebsbremse umfassenden Bremsanlage eines Nutzfahrzeugs, wobei im Falle eines Defektes der Betriebsbremse die Feststellbremse eine Bremsung des Nutzfahrzeugs unterstützt.

Es ist vorgesehen, dass die von den Feststellbremsaktuatoren der Feststellbremse aufzubringenden Bremskräfte über eine ABS-Regelschleife bestimmt werden und dass die Feststellbremsaktuatoren gemäß den bestimmten aufzubringenden Bremskräften betätigt werden.

Elektronische Bremssysteme sind üblicherweise derart ausgestaltet, dass die Bremssteuermodule u. a. elektrische Signale von einem Bremswertgeber erhalten, welcher zur Erfassung des Bremswunsches des Fahrers des Kraftfahrzeugs dient. Diese elektrischen Signale entsprechen somit einer vom Fahrer vorgegebenen Bremswertanforderung und werden von der Fahrzeugelektronik ausgewertet. In Abhängigkeit von weiteren Größen, wie z.B. Beladung, wird die Bremskraftverteilung auf die Achsen des Kraftfahrzeugs bestimmt und die Bremssteuermodule für die Vorder- und die Hinterachsen entsprechend angesteuert.

Ferner weist ein gattungsgemäßes Bremssystem eine Feststellbremseinrichtung auf. Hierzu sind bevorzugt die Räder mindestens einer Hinterachse mit zumeist kombinierten Betriebs- und Federspeicherbremszylindern ausgebildet. Sind die Federspeicherteile der Feststellbremse entlüftet, legt eine Speicherfeder die Bremse ein, um das Kraftfahrzeug auch im drucklosen Zustand sicher zu halten. Im Fahrbetrieb wird hingegen der Federspeicherteil der Feststellbremseinrichtung belüftet, so dass die Speicherfeder die Bremse nicht mehr anlegt. In diesem Fall wird das Kraftfahrzeug über die Betriebsbremszylinder von der Betriebsbremse eingebremst.

Aus Sicherheitsgründen ist bei Kraftfahrzeugen mit einem elektronisch geregelten Bremssystem eine Redundanz, z.B. in Form eines rein pneumatischen Steuersignals zur Aussteuerung des Bremsdruckes vorgesehen. Bei einem Ausfall, insbesondere der elektrischen bzw. elektronischen Komponenten, eines derartigen Bremssystems wird bei einer Bremsung das rein pneumatische Steuersignal wirksam und das Fahrzeug kann sicher zum Stehen gebracht werden.

Eine Redundanz des Bremssystems kann ein- oder zweikreisig ausgelegt sein. Bei einkreisiger Redundanz ist nur einer von zwei unabhängig voneinander wirkenden Bremskreisen redundant ausgelegt, wobei es sich hierbei üblicherweise um den Vorderachs-Bremskreis handelt und bei zweikreisiger Redundanz sind hingegen beide Bremskreise, nämlich der Vorderachs-Bremskreis und der Hinterachs-Bremskreis, redundant ausgelegt. Da die Hinterachse jedoch ein ständig wechselndes Last-/Leer-Verhältnis aufweist, welches im Wesentlichen von der Zuladung abhängig ist, ist die Auslegung der Redundanz auf dem Hinterachs-Bremskreis schwierig.

Nach alledem liegt der Erfindung die Aufgabe zugrunde, die Funktionsweise von elektronisch geregelten Bremssystemen der eingangs genannten Art zu verbessern, insbesondere die Ausfallsicherheit bei Systemen mit einkreisiger Redundanz zu erhöhen, um durch die einkreisige Redundanz das Bremssystem einfacher und kostengünstiger gestalten zu können.

Die Erfindung löst diese Aufgabe mit den Merkmalen eines druckmittelbetriebenen Bremssystems gemäß Anspruch 1 sowie mit einem Kraftfahrzeug gemäß Anspruch 9.

Das erfindungsgemäße druckmittelbetriebene Bremssystem für ein Kraftfahrzeug, insbesondere Nutzfahrzeug, umfasst eine Betriebsbremseinrichtung und eine Feststellbremseinrichtung, wobei die Betriebsbremseinrichtung zur Bereitstellung einer Betriebsbremsfunktion des Kraftfahrzeugs im Fahrbetrieb und die Feststellbremseinrichtung zum Feststellen des Kraftfahrzeugs dient.

Dazu weist die Feststellbremseinrichtung ein Feststellbremsmodul und eine mit dem Feststellbremsmodul gekoppelte elektrische Betätigungseinrichtung auf, welche üblicherweise als Handbetätigungseinheit im Fahrerhaus des Kraftfahrzeugs angeordnet ist. In dem Feststellbremsmodul sind üblicherweise eine Vielzahl oder alle Komponenten der Feststellbremseinrichtung, insbesondere Ventileinrichtungen, Relaisventil und Steuerelektronik, in einer einzigen Baugruppe zusammengefasst, um die Feststellbremsfunktion der Feststellbremseinrichtung zu ermöglichen.

Als Feststellbremsmodul wird im Zusammenhang mit der Erfindung jedoch auch die Steuerelektronik der Feststellbremseinrichtung alleine bezeichnet, wenn die weiteren Komponenten der Feststellbremseinrichtung separat angeordnet sind. So ist es beispielsweise möglich, dass das Feststellbremsmodul lediglich als ein Abschnitt auf einer Leiterplatte anzusehen ist, wobei das Feststellbremsmodul mit anderen Steuerelektroniken weiterer Module des elektronischen Bremssystems auf einer gemeinsamen Leiterplatte angeordnet sein kann, um den Aufwand für die Verlegung von elektrischen und ggf. pneumatischen Leitungen bzw. den Montageaufwand zu reduzieren.

Die Betriebsbremseinrichtung weist erfindungsgemäß einen Bremswertgeber zum Erzeugen mindestens eines elektrischen Bremsanforderungssignals auf, wobei das elektrische Bremsanforderungssignal aus der Pedalbetätigung des Fahrers erzeugt wird. Je nach Ausgestaltung des Bremswertgebers können zusätzlich zu dem mindestens einen elektrischen Bremsanforderungssignal aus der Pedalbetätigung des Fahrers entsprechende pneumatische Drücke zum Be- und Entlüften der Bremszylinder erzeugt werden.

Das erfindungsgemäße Bremssystem zeichnet sich durch mindestens eine Datenleitung aus, mit der der Bremswertgeber mittelbar oder unmittelbar mit dem Feststellbremsmodul zum Herstellen einer Datenverbindung verbunden ist. Über diese Datenleitung wird das vom Bremswertgeber erzeugte Bremsanforderungssignal dem Feststellbremsmodul bzw. der in dem Feststellbremsmodul angeordneten Steuerelektronik der Feststellbremseinrichtung mittelbar oder unmittelbar übergeben.

Durch die direkte Übertragung des Bremsanforderungssignals an die Feststellbremseinrichtung lässt sich vorteilhaft die Bremswirkung an der Hinterachse bei einem Ausfall einzelner Komponenten, Signalleitungen und/oder Versorgungsleitungen nicht nur sicherstellen, sondern auch für den Fahrer komfortabel durch Betätigung des Bremspedals steuern.

Mittels der Feststellbremseinrichtung wird somit eine Redundanz für die Betriebsbremskreise, insbesondere den Hinterachs-Bremskreis, geschaffen, welche nicht wie üblich vom Fahrer manuell betätigt werden muss. Das übermittelte Bremsanforderungssignal ermöglicht dem Fahrer vorteilhaft ein Einbremsen des Kraftfahrzeugs mit dem Bremspedal auch dann, wenn die Betriebsbremseinrichtung ausgefallen ist, obwohl das Einbremsen des Kraftfahrzeugs dann über die Feststellbremseinrichtung erfolgt.

Gemäß einer bevorzugten Ausführungsform der Erfindung ist die Datenleitung zwischen dem Bremswertgeber und dem Feststellbremsmodul als ein LIN-Bus (Local Interconnect Network) ausgestaltet bzw. weist einen LIN-Bus auf. Unter einem LIN-Bus wird dabei ein einfaches serielles Bussystem zur Vernetzung von intelligenten Sensoren und Aktoren innerhalb des Kraftfahrzeugs verstanden, welches vorteilhaft kostengünstig eine einfache Datenübertragung ermöglicht.

Gemäß einer weiteren bevorzugten Ausführungsform der Erfindung ist die Datenleitung zwischen dem Bremswertgeber und dem Feststellbremsmodul als ein CAN-Bus (Controller Area Network) ausgestaltet bzw. weist einen CAN-Bus auf. Unter einem CAN-Bus wird dabei ein serielles Bussystem zur Vernetzung von Steuergeräten und Sensoreinheiten innerhalb des Kraftfahrzeugs verstanden, welches vorteilhaft eine höhere Bandbreite als der LIN-Bus aufweist. Die Verwendung eines CAN-Busses hat sich als Standard in der Kraftfahrzeugtechnik durchgesetzt und ist deshalb vorteilhaft.

Eine weitere bevorzugte Ausführungsform der Erfindung sieht vor, über die Datenleitung ein PWM-Signal (pulsweitenmoduliertes Signal) zu übertragen. PWM-Signale lassen sich einfach erzeugen und über jede elektrische Leitung übertragen.

Erfindungsgemäß sind der Bremswertgeber und das Feststellbremsmodul jeweils unmittelbar mit der elektrischen Betätigungseinrichtung der Feststellbremseinrichtung zum Herstellen je einer Datenverbindung verbunden. Dabei können die jeweiligen Datenverbindungen unterschiedlich ausgebildet sein. Die Datenverbindung zwischen dem Bremswertgeber und der elektrischen Betätigungseinrichtung der Feststellbremseinrichtung ergänzt auf vorteilhafter Weise die vorhandene Datenverbindung zwischen der elektrischen Betätigungseinrichtung der Feststellbremseinrichtung und dem Feststellbremsmodul, so dass für die Realisierung der erfindungsgemäßen Redundanz innerhalb des elektronisch geregelten Bremssystems lediglich eine kurze, kostengünstige Signalleitung, insbesondere innerhalb der Konsole vom Bremspedal zur Handbetätigungseinrichtung, notwendig ist. Dadurch lassen sich vorteilhafterweise Kosten und Montageaufwand einsparen.

Erfindungsgemäß sind die elektrische Betätigungseinrichtung der Feststellbremseinrichtung und das Feststellbremsmodul jeweils unmittelbar mit dem Bremswertgeber zum Herstellen je einer Datenverbindung verbunden. Dabei können die jeweiligen Datenverbindungen unterschiedlich ausgebildet sein, so dass bspw. eine Datenleitung als LIN-Bus und eine Datenleitung als CAN-Bus ausgebildet ist. Für die Realisierung der erfindungsgemäßen Redundanz innerhalb des elektronisch geregelten Bremssystems ist neben einer Datenleitung zwischen dem Bremswertgeber und dem Feststellbremsmodul vorteilhafterweise lediglich eine kurze, kostengünstige Signalleitung zwischen dem Bremswertgeber und der elektrischen Betätigungseinrichtung der Feststellbremseinrichtung notwendig, insbesondere innerhalb der Konsole vom Bremspedal zur Handbetätigungseinrichtung. Dadurch lassen sich vorteilhafterweise Kosten und Montageaufwand einsparen.

Erfindungsgemäß sind der Bremswertgeber, das Feststellbremsmodul und die elektrische Betätigungseinrichtung der Feststellbremseinrichtung jeweils unmittelbar miteinander zum Herstellen je einer Datenverbindung verbunden. Dabei können die jeweiligen Datenverbindungen unterschiedlich ausgebildet sein. Die Datenverbindung zwischen dem Bremswertgeber und der elektrischen Betätigungseinrichtung der Feststellbremseinrichtung ergänzt vorteilhafterweise die Datenverbindung zwischen der elektrischen Betätigungseinrichtung der Feststellbremseinrichtung und dem Feststellbremsmodul, um die erfindungsgemäße Redundanz innerhalb des elektronisch geregelten Bremssystems herzustellen. Die Datenverbindung zwischen dem Bremswertgeber und dem Feststellbremsmodul ermöglicht vorteilhafterweise eine zusätzliche Redundanz innerhalb des elektronisch geregelten Bremssystems.

Gemäß einer weiteren bevorzugten Ausführungsform der Erfindung weist die Feststellbremseinrichtung wenigstens einen Betriebs- und Federspeicherbremszylinder auf. Derartige kombinierte Betriebs- und Federspeicherbremszylinder werden üblicherweise an der Hinterachse verwendet und weisen einen Membranzylinder für die Betriebsbremse sowie einen Federspeicherzylinder für die Feststellbremse auf. Beide Bremszylinder sind unabhängig voneinander betätigbar, wobei eine Bremsung erzielt wird, wenn der Betriebsbremszylinder mit Druck beaufschlagt wird oder wenn am Federspeicherbremszylinder ein Druckabfall entsteht. Somit ist auch bei Fehlen von Druckluft eine Bremsung des Kraftfahrzeugs möglich.

Durch die Verwendung von kombinierten Betriebs- und Federspeicherbremszylindern lassen sich vorteilhafterweise Kosten, Platz und Aufwand für die Verlegung von pneumatischen und unter Umständen auch elektrischen Leitungen einsparen. Alternativ ist jedoch ebenso die Verwendung einer elektromechanischen Feststellbremse zum Feststellen des Kraftfahrzeugs möglich. Die elektromechanische Feststellbremse lässt sich ebenfalls über ein Feststellbremsmodul mit entsprechender Steuerelektronik durch den Bremswertgeber bzw. die elektrische Betätigungseinrichtung der Feststellbremseinrichtung ansteuern.

In einer weiteren bevorzugten Ausführungsform der Erfindung weist das Bremssystem zusätzlich zu einer ersten Energieversorgung mindestens eine weitere, von der ersten Energieversorgung unabhängige Energieversorgung auf. Die erste Energieversorgung umfasst dabei eine Haupt-Batterie, insbesondere Haupt-Kraftfahrzeugbatterie, mit der im Wesentlichen die elektrische Betätigungseinrichtung der Feststellbremseinrichtung, das Feststellbremsmodul, der Bremswertgeber und ein Zentralmodul des Bremssystems elektrisch versorgt werden.

Die weitere Energieversorgung ist durch eine Sicherheits-Batterie, insbesondere Kraftfahrzeugbatterie, gegeben. Diese dient in dem Fall, dass die Haupt-Batterie ausfällt, im Wesentlichen der Stromversorgung der elektrischen Betätigungseinrichtung der Feststellbremseinrichtung, des Feststellbremsmoduls, des Bremswertgebers und des Zentralmoduls des Bremssystems sowie der elektrischen Versorgung der Radmodule an der Vorderachse. Durch die zusätzlichen Anschlüsse für die elektrische Versorgung der Radmodule an der Vorderachse ist vorteilhaft eine zusätzliche Ausfallsicherung gegenüber der Haupt-Batterie gegeben.

Gemäß einer weiteren bevorzugten Ausführungsform der Erfindung ist der Bremswertgeber derart ausgestaltet, um ausschließlich elektrische Bremsanforderungssignale bereitzustellen. Bei dieser Ausführungsform entfällt die rein pneumatische Redundanz. Der Verzicht der pneumatischen Redundanz über pneumatische Leitungen am Bremswertgeber sorgt vorteilhafterweise für Einsparungen von Verrohrungen und somit für Kosten- und Aufwandsersparnis bei der Montage.

Gemäß einer alternativen Ausführungsform der Erfindung ist der Bremswertgeber derart ausgestaltet, um zusätzlich zu den elektrischen Bremsanforderungssignalen ausschließlich für die Vorderachse pneumatische Bremsanforderungssignale bereitzustellen. Bei Bremssystemen mit einkreisig rein pneumatisch ausgelegter Redundanz ist nur ein Bremskreis redundant ausgelegt, welches üblicherweise der Vorderachs-Bremskreis ist.

Aufgrund der gesetzlichen Vorgaben muss, insbesondere bei LKWs mit hoher Last an der Hinterachse, die Bremswirkung auch bei Ausfall der Betriebsbremse sichergestellt sein. Durch die direkte Übertragung des Bremsanforderungssignals an die Feststellbremseinrichtung lässt sich vorteilhafterweise die Bremswirkung somit auch an der Hinterachse bei einem Ausfall einzelner Komponenten, Signalleitungen und/oder Versorgungsleitungen bei einer einkreisig ausgebildeten Redundanz des Bremssystems sicherstellen.

In einer weiteren Ausführungsform der Erfindung ist das Feststellbremsmodul oder die Steuereinheit des Feststellbremsmoduls in einem Steuergerät angeordnet, wobei das Steuergerät neben einer Steuerfunktion des Feststellbremsmoduls weitere Steuerfunktionen bzw. Sensorfunktionen beinhaltet, insbesondere die Steuerfunktionen eines Hinterachsmodulators und/oder die Sensorfunktionen eines Fahrdynamiksensormoduls. Das hat den Vorteil, dass die einzelnen Gehäuse der integrierten Module entfallen und ein gemeinsames Gehäuse des Steuergerätes verwendet wird, wodurch weniger Platz und weniger elektrische und ggf. pneumatische Leitungen benötigt werden und somit der Montageaufwand und die Montagekosten reduziert werden. Ferner reduziert sich vorteilhaft die Anzahl der Anschlüsse durch Verwendung gemeinsamer Anschlüsse eines Steuergerätes.

Um die Ausfallsicherheit des Bremssystems zu erhöhen, werden die in dem Steuergerät enthaltenen Steuerfunktionen der einzelnen Module bevorzugt von mindestens zwei unterschiedlichen Prozessoren übernommen, so dass eine zusätzliche Redundanz geschaffen wird. Bevorzugt sind die Prozessoren unabhängig voneinander betriebsfähig, so dass im Fehlerfall des einen Prozessors keine Beeinflussung des jeweils nicht fehlerhaften Prozessors erfolgt.

Des Weiteren löst die Erfindung die o. g. Aufgabe mit einem Kraftfahrzeug, insbesondere Nutzfahrzeug, welches ein erfindungsgemäßes Bremssystem aufweist.

Weitere Ausführungsformen ergeben sich aus den Ansprüchen sowie aus den anhand der Zeichnung näher erläuterten Ausführungsbeispielen. In der Zeichnung zeigen:
- Fig. 1: eine schematische Darstellung eines Bremssystems mit einfacher pneumatischer Redundanz an der Vorderachse und
- Fig. 2: eine schematische Darstellung eines Bremssystems ohne pneumatische Redundanz.

In den Figuren sind gleichartige Teile mit identischen Bezugsziffern versehen, so dass mit der Erläuterung eines Teils in einer Figur dieses Teil auch in anderen Figuren beschrieben ist.

Ferner sind in den Figuren elektrische Leitungen als durchgezogene Linien, pneumatische Leitungen als punktierte Linien und Datenleitungen als strichpunktierte Linien gezeichnet.

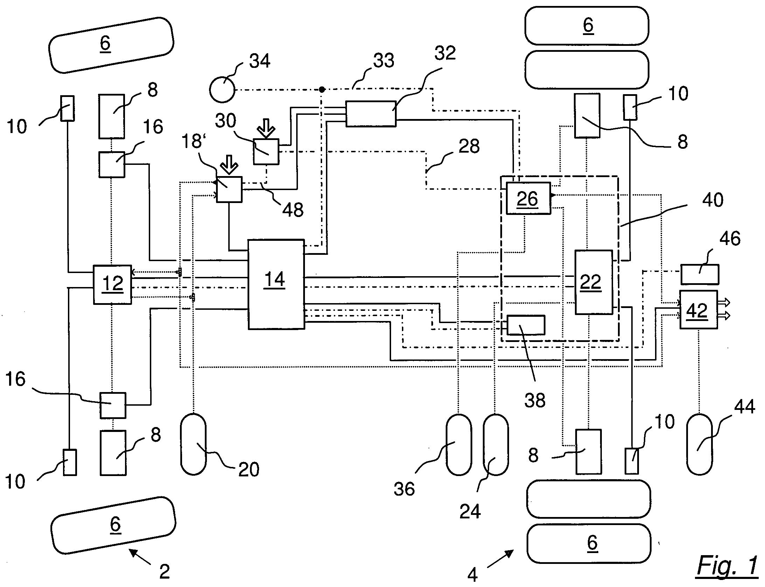

Fig. 1 zeigt eine schematische Darstellung eines druckmittelbetriebenen Bremssystems, insbesondere eines druckluftbetriebenen Bremssystems. Derartige Bremssysteme werden bspw. bei Nutzfahrzeugen, insbesondere LKWs und Bussen, verwendet.

Das in Fig. 1 dargestellte elektrisch gesteuerte Bremssystem zeigt lediglich einige ausgewählte Komponenten. Das hier dargestellte Kraftfahrzeug weist eine Vorderachse 2 und eine Hinterachse 4 auf. Die Erfindung ist jedoch nicht auf zweiachsige Fahrzeuge beschränkt. Vielmehr können auch Kraftfahrzeuge mit mehr als zwei Achsen, insbesondere mehreren Hinterachsen und/oder mehreren Vorderachsen, eingesetzt werden. Unter einem Kraftfahrzeug wird ein Zugfahrzeug oder auch ein Kraftfahrzeug ohne Zugfunktion, z.B. ein Bus, verstanden.

Das Kraftfahrzeug weist Räder 6 an der Vorderachse 2 sowie an der Hinterachse 4 auf, die jeweils zur individuellen Abbremsung mit Bremszylindern 8 versehen sind. Die Bremszylinder 8 sind zumindest an der Hinterachse 4 als kombinierte Betriebs- und Federspeicherbremszylinder ausgebildet.

Bei derartigen kombinierten Betriebs- und Federspeicherbremszylindern ist der Betriebsbremsteil mit einer durch Druckluft beaufschlagbaren Membran versehen und pneumatisch mit der Betriebsbremsanlage verbunden. Der Federspeicherteil ist pneumatisch von dem Betriebsbremsteil getrennt und über eine gesonderte Druckluftleitung mit Druckluft beaufschlagbar. Bei Druckluftbeaufschlagung des Federspeicherteils wird eine Speicherfeder vorgespannt und somit eine Bremswirkung verhindert. Die Bremswirkung der Feststellbremse wird durch Entlüftung des Federspeicherteils erzielt.

An den Rädern 6 sind jeweils Geschwindigkeits-Sensiermittel 10 angeordnet, um die jeweilige Raddrehgeschwindigkeit zu ermitteln. Die Geschwindigkeits-Sensiermittel 10 sind über einen Vorderachsmodulator 12 über elektrische Leitungen mit einem Zentralmodul 14 des elektrisch geregelten Bremssystems verbunden. Ferner sind ABS-Ventile 16 (Antilock Braking System) zum Ansteuern des Bremsdruckes der Bremszylinder 8 über Druckluftleitungen mit dem Vorderachsmodulator 12 verbunden sowie über elektrische Leitungen mit dem Zentralmodul 14 des Bremssystems.

Das Bremssystem weist ferner einen Bremswertgeber 18' auf, der einen Bremswunsch des Fahrers erfasst. Der Bremswertgeber 18' umfasst einen pneumatischen Teil und einen elektrischen Teil.

Der pneumatische Teil wird von einem ersten Druckluftvorratsbehälter 20 mit Druckluft versorgt. Durch Betätigung eines Bremspedals wird von dem Bremswertgeber 18' eine pneumatische Stellgröße erzeugt, die über Druckluftleitungen an die Bremszylinder 8 der Vorderachse 2 weitergeleitet wird. Die pneumatischen Signale werden jedoch nur im Redundanzfall benötigt, im normalen Bremsbetrieb werden sie nicht weiter berücksichtigt.

Der elektrische Teil des Bremswertgebers 18' weist einen elektrischen Sensor auf, welcher die mechanische Betätigung des Bremspedals erfasst und ein diese Betätigung repräsentierendes Signal erzeugt. Dieses elektrische Signal dient zur Steuerung des Bremssystems auf elektrischer Basis und wird als elektrisches Bremsanforderungssignal dem Zentralmodul 14 übergeben.

An der Hinterachse 4 befindet sich ein Hinterachsmodulator 22 mit einer eigenständigen Elektronik zum Regeln der Bremsfunktion an den Rädern 6 der Hinterachse 4. Dazu wird von den Geschwindigkeits-Sensiermitteln 10 die Raddrehzahl der einzelnen Räder 6 der Hinterachse 4 an den Hinterachsmodulator 22 über elektrische Leitungen übergeben. Ferner ist der Hinterachsmodulator 22 über eine elektrische Leitung sowie über eine Datenleitung mit dem Zentralmodul 14 verbunden und empfängt von dem Zentralmodul 14 ein elektrisches Bremsanforderungssignal des Bremswertgebers 18'.

Der Bremsdruck in den Bremszylindern 8 der Hinterräder 6 wird über in dem Hinterachsmodulator 22 angeordnete Ventile gesteuert. Die Druckluft, die dazu erforderlich ist, entnimmt der Hinterachsmodulator 22 einem zweiten Druckluftvorratsbehälter 24.

Die Bremszylinder 8 der Hinterachse 4 sind bevorzugt als kombinierte Betriebs- und Federspeicherbremszylinder ausgebildet, um neben der Betriebsbremse auch eine Feststellbremsfunktion bereitzustellen. Dazu ist der Federspeicherteil des Bremszylinders 8 über pneumatische Druckluftleitungen mit einem Feststellbremsmodul 26 verbunden.

Das Feststellbremsmodul 26 weist eine elektronische Steuereinrichtung auf, welche u. a. zum einstellbaren Betätigen der Feststellbremse dient. Dazu werden die Ventile des Feststellbremsmoduls 26 derart angesteuert, dass der sich in der Druckleitung einstellende Bremsdruck annähernd dem Bremsdruck-Sollwert entspricht. Über Federspeicherbremszylinder wird dann eine Bremswirkung erzielt.

Die Erfindung ist jedoch nicht auf ein Feststellbremsmodul 26 mit allen Komponenten der Feststellbremseinrichtung beschränkt. Vielmehr kann auch die elektrische Steuereinrichtung zum Ausüben der Feststellbremsfunktion im Zusammenhang mit der Erfindung als Feststellbremsmodul 26 bezeichnet werden.

Der Hinterachsmodulator 22 ist ferner über eine Datenleitung mit dem Zentralmodul 14 verbunden. Ebenso ist der Vorderachsmodulator 12 mit dem Zentralmodul 14 über eine Datenleitung verbunden.

Das Feststellbremsmodul 26 ist über eine Datenleitung 28 mit einer elektrischen Betätigungseinrichtung 30 der Feststellbremseinrichtung verbunden, wobei über die Datenleitung 28 ein PWM-Signal übertragbar ist oder die Datenleitung 28 ganz oder teilweise als CAN-Bus ausgebildet ist oder aber bevorzugt ganz oder teilweise als kostengünstiger LIN-Bus ausgebildet ist.

Das Feststellbremsmodul 26 und die elektrische Betätigungseinrichtung 30 werden von einer Stromversorgungseinrichtung, z.B. einer Fahrzeugbatterie als eine erste Energieversorgung 32, über eine elektrische Leitung mit Strom versorgt. Diese Stromversorgungseinrichtung 32 versorgt über eine weitere elektrische Leitung das Zentralmodul 14 des Bremssystems ebenfalls mit Strom.

Des Weiteren ist das Feststellbremsmodul 26 über eine Datenleitung 33, insbesondere einen Fahrzeugdatenbus bzw. CAN-Bus, mit dem Zentralmodul 14 verbunden. An dieser Datenleitung 33 ist zudem ein Lenkwinkelsensor 34 angeordnet, dessen Daten über die Datenleitung 33 dem Zentralmodul 14 des Bremssystems übergeben werden. Der Lenkwinkelsensor 34 ist z.B. an der Lenksäule befestigt und gibt Informationen über die Lenkbewegung des Fahrers an die Elektronik des Bremssystems weiter.

Schließlich ist das Feststellbremsmodul 26 über eine Druckluftleitung mit einem dritten Druckluftvorratsbehälter 36 zur Druckluftversorgung verbunden.

Das in Fig. 1 dargestellte Bremssystem weist ferner ein Fahrdynamiksensormodul 38, insbesondere ein ESC-Modul (Electronic Stability Control) auf, wobei aufgrund der Sensorfunktion des ESC-Moduls in stabilitätskritischen Fahrsituationen korrigierend in die Motor- und Bremssteuerung eingegriffen werden kann und vorteilhaft im Rahmen von physikalischen Grenzen ein Kippen, Schleudern, Drehen und/oder Einknicken des Kraftfahrzeugs verhindert werden kann.

Optional können das Fahrdynamiksensormodul 38, das Feststellbremsmodul 26 und der Hinterachsmodulator 22 in einem gemeinsamen Steuergerät 40 angeordnet sein, was durch einen gestrichelten Rahmen in Fig. 1 dargestellt ist. Eine Anordnung der einzelnen Module oder der einzelnen Steuerfunktionen der jeweiligen Module in einem gemeinsamen Steuergerät 40 hat den Vorteil, dass weniger Platz und weniger elektrische und ggf. pneumatische Leitungen benötigt werden. Gleichzeitig werden der Montageaufwand sowie die Montagekosten reduziert.

Das bisher beschriebene Kraftfahrzeug ist außerdem zur Ankopplung eines Anhängefahrzeugs geeignet. Dazu weist das Bremssystem ein Anhängersteuerventil 42 auf, welches zur Bremsdrucksteuerung eines angekoppelten Anhängefahrzeugs dient. Das Anhängersteuerventil 42 ist zur Druckluftversorgung über eine Druckluftleitung mit einem vierten Druckluftvorratsbehälter 44 verbunden. Das Anhängersteuerventil 42 gibt die Druckluft des Druckluftvorratsbehälters 44 entsprechend von elektrischen und/oder pneumatischen Steuersignalen an die Bremsanlage des Anhängefahrzeugs weiter.

Die Druckluftvorratsbehälter 20, 24, 36 und 44 werden über eine hier nicht dargestellte Druckluftversorgungsanlage, z.B. einem vom Kraftfahrzeug angetriebenen Kompressor, mit Druckluft befüllt.

Schließlich ist noch ein elektrischer Steckanschluss 46 zur Stromversorgung und zur Übermittlung von Datensignalen für das Anhängefahrzeug vorgesehen.

Das in Fig. 1 dargestellte Bremssystem ist mit einer einkreisig rein pneumatischen Redundanz an der Vorderachse 2 ausgelegt. D.h. im Normalbetrieb wird mittels eines elektrischen Bremsanforderungssignals über das Zentralmodul 14 ein Druck für die Bremszylinder 8 bestimmt und von dem Vorderachsmodulator 12 und dem Hinterachsmodulator 22 ausgeregelt.

In einem Redundanzfall, z.B. bei einem Ausfall der elektrischen Steuerung oder einem Ausfall einzelner Steuermodule erfolgt eine Umschaltung auf das pneumatische Signal am Bremswertgeber 18', welches jedoch nur die Vorderachse 2 ansteuert.

Zum Sicherstellen der Bremsleistung im Störungsfall auch an der Hinterachse, soll erfindungsgemäß eine Redundanz über die Feststellbremse hergestellt werden, bei der der Fahrer wie gewohnt über das Bremspedal das Kraftfahrzeug abbremsen kann.

Dazu weisen der Bremswertgeber 18' und die elektrische Betätigungseinrichtung 30 der Feststellbremse eine Datenleitung 48 zum Herstellen einer Datenverbindung auf. Bei einem Störungsfall des elektronisch geregelten Bremssystems, z.B. bei einem Ausfall des Zentralmoduls 14, wird das Bremsanforderungssignal des Bremswertgebers 18' unmittelbar der als Relais fungierenden elektrischen Betätigungseinrichtung 30 der Feststellbremse übergeben, um die Bremszylinder 8 an der Hinterachse über das Feststellbremsmodul 26 entsprechend dem Bremswunsch des Fahrers direkt über die Datenleitung 28 anzusteuern.

Bei der Datenleitung 48 handelt es sich bevorzugt um einen kostengünstigen LIN-Bus. Es ist jedoch ebenso eine Verwendung eines CAN-Busses oder eines PWM-Signals denkbar, wie auch die Verwendung einer beliebigen Netzstruktur, welche geeignet ist, das Bremsanforderungssignal zu übertragen. Ferner können verschiedene Datenleitungen miteinander kombiniert werden.

Die Anordnung der Datenleitung 48 in der Fahrerkabine zwischen dem Bremspedal des Bremswertgebers 18' und der Handbetätigungseinheit der elektrischen Betätigungseinrichtung 30 spart Kosten und Montageaufwand. Die Erfindung ist jedoch nicht auf eine derartige Anordnung zum Herstellen einer Datenverbindung zwischen dem Bremswertgeber 18' und dem Feststellbremsmodul 26 beschränkt. Vielmehr ist gemäß einer alternativen Ausgestaltung der Erfindung eine direkte, hier jedoch nicht dargestellte Datenverbindung zwischen dem Bremswertgeber 18' und dem Feststellbremsmodul 26 über eine in Fig. 1 nicht dargestellte Datenleitung vorgesehen.

Ferner kann bei Verwendung einer derartigen vorstehend genannten, jedoch nicht in Fig. 1 nicht dargestellten Datenleitung zwischen dem Bremswertgeber 18' und dem Feststellbremsmodul 26 die Datenverbindung der elektrischen Betätigungseinrichtung 30 zum Feststellbremsmodul 26 über den Bremswertgeber 18' erfolgen, welcher als Relais für die elektrische Betätigungseinrichtung 30 fungiert.

Die erfindungsgemäße Datenverbindung zwischen dem Bremswertgeber 18' und dem Feststellbremsmodul 26 ermöglicht entsprechend den gesetzlichen Vorgaben eine Redundanz an der Hinterachse 4 über die Feststellbremseinrichtung, wobei vorteilhaft die pneumatische Redundanz an der Hinterachse 4 eingespart werden kann.

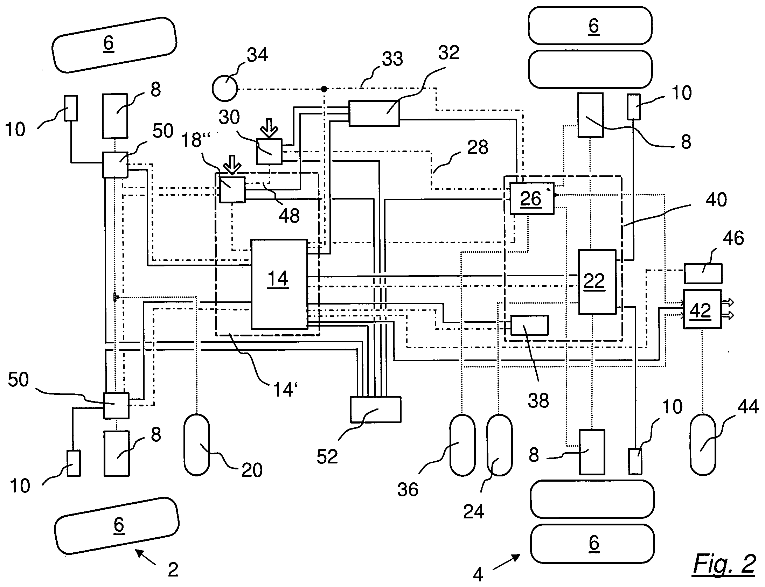

Fig. 2 zeigt eine schematische Darstellung eines Bremssystems ohne pneumatische Redundanz. Das zweite Ausführungsbeispiel gleicht in wesentlichen Teilen dem ersten Ausführungsbeispiel. Insbesondere bezeichnen gleiche Bezugsziffern gleiche Teile.

Der in Fig. 2 dargestellte Bremswertgeber 18" weist neben einer Stromversorgungsleitung zu der ersten Energieversorgung 32 und einer Stromversorgungsleitung zu der zweiten Energieversorgung 52 lediglich Datenleitungen auf, mit denen das elektrische Bremsanforderungssignal, welches den Bremswunsch des Fahrers entspricht an das Zentralmodul 14 und an Radmodule 50 an der Vorderachse 2 des Kraftfahrzeugs übertragen wird, wobei die Radmodule 50 die Bremszylinder 8 der Räder 6 entsprechend dem Bremsanforderungssignal ansteuern.

Alternativ, durch einen gestrichelten Rahmen in Fig. 2 dargestellt, kann das Bremssystem eine zentrale Bremseinheit 14' aufweisen, welche u. a. das Zentralmodul 14 des Bremssystems und den Bremswertgeber 18' umfasst.

Das Zentralmodul 14 oder die zentrale Bremseinheit 14' ist zusammen mit den Radmodulen 50, dem Bremswertgeber 18", der elektrischen Betätigungseinrichtung 30 und dem Feststellbremsmodul 26 oder dem gemeinsamen Steuergerät 40 über jeweils eine elektrische Stromversorgungsleitung mit einer weiteren Energieversorgung 52, insbesondere einer Sicherheits-Batterie, verbunden. Diese Stromversorgungseinrichtung 52 ermöglicht einen Betrieb des elektronisch geregelten Bremssystems auch bei Ausfall der ersten Energieversorgung 32, was zusätzliche Ausfallsicherheit des Bremssystems bietet, da die jeweils andere Energieversorgung alle Bremsfunktionen des elektrisch geregelten Bremssystems aufrecht erhalten kann.

Bei dem in Fig. 2 dargestellten Bremssystem liegt eine Redundanz an der Vorderachse 2 über vorhandene Datenleitungen vor. Eine Redundanz an der Hinterachse 4 wird erfindungsgemäß über die Datenleitungen 48 und 28 zwischen dem Bremswertgeber 18' und dem Feststellbremsmodul 26 oder dem gemeinsamen Steuergerät 40 hergestellt, wodurch auch das in Fig. 2 dargestellte Bremssystem den gesetzlichen Vorgaben genügt.

Auch hier können die Datenleitungen 48 und 28 unterschiedlich ausgebildet sein, bevorzugt jedoch als kostengünstiger LIN-Bus. Ebenso ist zusätzlich oder alternativ eine nicht eingezeichnete Datenleitung direkt zwischen dem Bremswertgeber 18" und dem Feststellbremsmodul 26 oder dem gemeinsamen Steuergerät 40 zur Übertragung des Bremsanforderungssignals denkbar.

Falls die reguläre Regelung der Betriebsbremse an der Hinterachse 4 nicht funktioniert, kann der Bremswertgeber 18" ein entsprechendes Bremsanforderungssignal an die Feststellbremseinrichtung übermitteln, so dass mit Hilfe der Federspeicherbremszylinder eine Einbremsung der Hinterachse 4 erfolgt. Dies ist erfindungsgemäß sogar dann möglich, wenn die Stromversorgung der Haupt-Batterie 32 des Kraftfahrzeugs unterbrochen ist.

Die in Fig. 1 und Fig. 2 dargestellten Ausführungsbeispiele eines druckmittelbetriebenen Bremssystems stelle keine Beschränkung dar. Einzelne Teile des Bremssystems können beliebig angeordnet oder verteilt sein.

## Patentansprüche

1. Druckmittelbetriebenes Bremssystem für ein Kraftfahrzeug, insbesondere Nutzfahrzeug, mit einer Betriebsbremseinrichtung und einer Feststellbremseinrichtung, wobei die Feststellbremseinrichtung ein Feststellbremsmodul (26) und eine mit dem Feststellbremsmodul (26) gekoppelte elektrische Betätigungseinrichtung (30) aufweist, und wobei die Betriebsbremseinrichtung einen Bremswertgeber (18', 18") zum Erzeugen mindestens eines elektrischen Bremsanforderungssignals aufweist,
**dadurch gekennzeichnet, dass**
ein elektrischer Teil des Bremswertgebers (18', 18") einen elektrischen Sensor aufweist, welcher die mechanische Betätigung eines Bremspedals erfasst und das diese Betätigung repräsentierende elektrische Bremsanforderungssignal erzeugt,
der Bremswertgeber (18', 18") mittels mindestens einer Datenleitung mit dem Feststellbremsmodul (26) zum Herstellen einer Datenverbindung mittelbar oder unmittelbar verbunden ist und
das Bremsanforderungssignal über diese Datenleitung an das Feststellbremsmodul (26) mittelbar oder unmittelbar übergeben wird, um darüber Bremszylinder (8) an einer Hinterachse (4) des Kraftfahrzeugs entsprechend dem Bremswunsch des Fahrers anzusteuern, wobei das übergebene Bremsanforderungssignal ein Einbremsen des Kraftfahrzeugs mit dem Bremspedal auch dann bewirkt, wenn die Betriebsbremseinrichtung ausgefallen ist, indem das Einbremsen des Kraftfahrzeugs dann über die Feststellbremseinrichtung erfolgt,
wobei entweder der Bremswertgeber (18', 18") und das Feststellbremsmodul (26) jeweils unmittelbar mit der elektrischen Betätigungseinrichtung (30) der Feststellbremseinrichtung zum Herstellen je einer Datenverbindung verbunden sind oder
die elektrische Betätigungseinrichtung (30) der Feststellbremseinrichtung und das Feststellbremsmodul (26) jeweils unmittelbar mit dem Bremswertgeber (18', 18") zum Herstellen je einer Datenverbindung verbunden sind oder
der Bremswertgeber (18', 18"), das Feststellbremsmodul (26) und die elektrische Betätigungseinrichtung (30) der Feststellbremseinrichtung jeweils unmittelbar miteinander zum Herstellen je einer Datenverbindung verbunden sind.

2. Bremssystem nach Anspruch 1,
**dadurch gekennzeichnet, dass**
die Datenleitung ein LIN-Bus ist oder aufweist.

3. Bremssystem nach Anspruch 1 oder 2,
**dadurch gekennzeichnet, dass**
die Datenleitung ein CAN-Bus ist oder aufweist.

4. Bremssystem nach einem der vorhergehenden Ansprüche,
**dadurch gekennzeichnet, dass**
über die Datenleitung ein PWM-Signal übertragbar ist.

5. Bremssystem nach einem der vorhergehenden Ansprüche,
**dadurch gekennzeichnet, dass**
die Feststellbremseinrichtung wenigstens einen kombinierten Betriebs- und Federspeicherbremszylinder aufweist.

6. Bremssystem nach einem der vorhergehenden Ansprüche,
**dadurch gekennzeichnet, dass**
das Bremssystem zusätzlich zu einer ersten Energieversorgung (32) mindestens eine weitere, von der ersten Energieversorgung unabhängige Energieversorgung (52) aufweist.

7. Bremssystem nach einem der vorhergehenden Ansprüche,
**dadurch gekennzeichnet, dass**
der Bremswertgeber (18', 18") derart ausgestaltet ist, um ausschließlich elektrische Bremsanforderungssignale bereitzustellen oder zusätzlich zu elektrischen Bremsanforderungssignalen ausschließlich für die Vorderachse pneumatische Bremsanforderungssignale bereitzustellen.

8. Bremssystem nach einem der vorhergehenden Ansprüche,
**dadurch gekennzeichnet, dass**
das Feststellbremsmodul (26) in einem Steuergerät (40) angeordnet ist, wobei das Steuergerät (40) neben einer Steuerfunktion des Feststellbremsmoduls (26) weitere Steuerfunktionen bzw. Sensorfunktionen beinhaltet, insbesondere die Steuerfunktionen eines Hinterachsmodulators (22) und/oder die Sensorfunktionen eines Fahrdynamiksensormoduls (38).

9. Kraftfahrzeug, insbesondere Nutzfahrzeug,
**gekennzeichnet durch**
ein Bremssystem nach einem der Ansprüche 1 bis 8

## Claims

1. Pressurising-medium-operated brake system for a motor vehicle, in particular utility vehicle, having a service brake device and a parking brake device, wherein the parking brake device has a parking brake module (26) and an electric activation device (30) which is coupled to the parking brake module (26), and wherein the service brake device has a brake value generator (18', 18'') for generating at least one electric braking request signal, **characterized in that**
an electric part of the brake value generator (18', 18") has an electric sensor, which senses the mechanical activation of a brake pedal and generates the electric braking request signal representing this activation, the brake value generator (18', 18'') is indirectly or directly connected to the parking brake module (26) by means of at least one data line in order to establish a data connection, and
the braking request signal is transferred indirectly or directly to the parking brake module (26) via this data line in order in this way to actuate brake cylinders (8) on a rear axle (4) of the motor vehicle in accordance with the driver's braking request, wherein the transferred braking request signal causes the motor vehicle to also be braked using the brake pedal, if the service brake device has failed, by virtue of the motor vehicle then being braked via the parking brake device, wherein the brake value generator (18', 18'') and the parking brake module (26) are each directly connected to the electric activation device (30) of the parking brake device, in order to establish a data connection in each case, or
the electric activation device (30) of the parking brake device and the parking brake module (26) are each directly connected to the brake value generator (18', 18"), in order to establish a data connection in each case, or
the brake value generator (18', 18"), the parking brake module (26) and the electric activation device (30) of the parking brake device are each directly connected to one another, in order to establish a data connection in each case.

2. Brake system according to Claim 1,
**characterized in that**
the data line is or has a LIN bus.

3. Brake system according to Claim 1 or 2,
**characterized in that**
the data line is or has a CAN bus.

4. Brake system according to one of the preceding claims,
**characterized in that**
a PWM signal can be transmitted via the data line.

5. Brake system according to one of the preceding claims,
**characterized in that**
the parking brake device has at least one combined service and spring-loaded brake cylinder.

6. Brake system according to one of the preceding claims,
**characterized in that**
the brake system has, in addition to a first energy supply (32), at least one further energy supply (52) which is independent of the first energy supply.

7. Brake system according to one of the preceding claims,
**characterized in that**
the brake value generator (18', 18'') is configured to make available exclusively electrical braking request signals, or to make available, in addition to braking request signals, pneumatic braking request signals which are exclusively for the front axle.

8. Brake system according to one of the preceding claims,
**characterized in that**
the parking brake module (26) is arranged in a control unit (40), wherein the control unit (40) contains, in addition to a control function of the parking brake module (26), further control functions or sensor functions, in particular the control functions of a rear axle modulator (22) and/or the sensor functions of a vehicle dynamics sensor module (38).

9. Motor vehicle, in particular a utility vehicle, **characterized by**
a brake system according to one of Claims 1 to 8.

## Revendications

1. Système de freinage entraîné par fluide sous pression pour un véhicule automobile, en particulier un véhicule utilitaire, comprenant un dispositif de frein de service et un dispositif de frein de stationnement, le dispositif de frein de stationnement présentant un module de frein de stationnement (26) et un dispositif d'actionnement électrique (30) couplé au module de frein de stationnement (26), et dans lequel le dispositif de frein de service présente un générateur de valeur de freinage (18', 18") pour générer au moins un signal de demande de freinage électrique,
**caractérisé en ce que**
une partie électrique du générateur de valeur de freinage (18', 18'') possède un capteur électrique, lequel détecte l'actionnement mécanique d'une pédale de frein et génère le signal de demande de freinage électrique représentant cet actionnement,
le générateur de valeur de freinage (18', 18") est relié indirectement ou directement au moyen d'au moins une ligne de données au module de frein de stationnement (26) pour établir une liaison de données, et
le signal de demande de freinage est transmis directement ou indirectement au module de frein de stationnement (26) par l'intermédiaire de cette ligne de données afin de commander là-dessus les cylindres de frein (8) sur un essieu arrière (4) du véhicule automobile en fonction de la demande de freinage du conducteur, le signal de demande de freinage transmis provoquant un freinage du véhicule automobile avec la pédale de frein même lorsque le dispositif de frein de service est défaillant, **en ce que** le freinage du véhicule automobile s'effectue alors par l'intermédiaire du dispositif de frein de stationnement,
soit le générateur de valeur de freinage (18', 18") et le module de frein de stationnement (26) étant respectivement reliés directement au dispositif d'actionnement électrique (30) du dispositif de frein de stationnement en vue d'établir à chaque fois une liaison de données, soit
le dispositif d'actionnement électrique (30) du dispositif de frein de stationnement et le module de frein de stationnement (26) étant respectivement reliés directement au générateur de valeur de freinage (18', 18") en vue d'établir à chaque fois une liaison de données
le générateur de valeur de freinage (18', 18"), le module de frein de stationnement (26) et le dispositif d'actionnement électrique (30) du dispositif de frein de stationnement étant respectivement reliés directement les uns aux autres en vue d'établir à chaque fois une liaison de données.

2. Système de freinage selon la revendication 1, **caractérisé en ce que** la ligne de données est ou présente un bus LIN.

3. Système de freinage selon la revendication 1 ou 2, **caractérisé en ce que** la ligne de données est ou présente un bus CAN.

4. Système de freinage selon l'une quelconque des revendications précédentes, **caractérisé en ce qu'**un signal PWM peut être transmis sur la ligne de données.

5. Système de freinage selon l'une des revendications précédentes,
**caractérisé en ce que**
le dispositif de frein de stationnement possède au moins un cylindre combiné de frein de service et de frein à ressort.

6. Système de freinage selon l'une quelconque des revendications précédentes, **caractérisé en ce que** le système de freinage présente en plus d'une première alimentation en énergie (32) au moins une autre alimentation en énergie (52) indépendante de la première alimentation en énergie.

7. Système de freinage selon l'une quelconque des revendications précédentes, **caractérisé en ce que** le générateur de valeur de freinage (18', 18") est configuré de façon à fournir exclusivement des signaux de demande de freinage électriques ou pour fournir en plus des signaux de demande de freinage électriques des signaux de demande de freinage pneumatiques exclusivement destinés à l'essieu avant.

8. Système de freinage selon l'une quelconque des revendications précédentes, **caractérisé en ce que** le module de frein de stationnement (26) est disposé dans un contrôleur (40), le contrôleur (40) comprenant en plus d'une fonction de commande du module de frein de stationnement (26) d'autres fonctions de commande ou fonctions de capteur, en particulier la fonction de commande d'un modulateur d'essieu arrière (22) et/ou les fonctions de capteur d'un module de capteur de dynamique de conduite (38).

9. Véhicule automobile, en particulier véhicule utilitaire, **caractérisé par** un système de freinage selon l'une quelconque des revendications 1 à 8.
